# EUROPEAN PATENT SPECIFICATION

(11) **EP 3 830 659 B1**
(45) Date of publication and mention of the grant of the patent: **28.01.2026**
(21) Application number: 19733039.2
(22) Date of filing: 27.06.2019
(51) Int. Cl.: C21C 5/56, F27B 3/08, F27D 19/00, F27D 21/00, C21C 5/52, F27D 3/00, G05B 19/418

(54) **EQUIPMENT FOR MEASUREMENT AND CONTROL OF LOAD MATERIAL FED INTO A FURNACE**
AUSRÜSTUNG ZUR MESSUNG UND STEUERUNG DER BELADUNGSMATERIALZUFÜHRUNG IN EINEN OFEN
ÉQUIPEMENT DE MESURE ET DE COMMANDE D'UN MATÉRIAU DE CHARGE INTRODUIT DANS UN FOUR

(30) Priority: 31.07.2018 IT 201800007649
(43) Date of publication of application: 09.06.2021
(73) Proprietor: Tenova S.p.A., 20149 Milano (IT)
(72) Inventor: LOCATELLI, Dario, 24047 Treviglio (BG) (IT); REALI, Silvio Maria, 20149 Milano (IT); ARGENTA, Paolo, 22070 Cassina Rizzardi (CO) (IT)
(74) Representative: Dragotti & Associati S.P.A.
(86) International application number: PCT/EP2019/067136
(87) International publication number: WO 2020/025227

(56) References cited:
- WO-A1-2009/095457
- DE-C1- 10 124 784
- JP-A- S63 201 484
- US-A1- 2016 061 529
- "Load Cell Technology - Technical Note VPGT-01 - VPG TRANSDUCER", 24 January 2015, article ANONYMOUS: "Load Cell Technology - Technical Note VPGT-01 - VPG TRANSDUCER", pages: 1 - 3, XP093031690
- ANONYMOUS: "Tension and Compression Load Cell", 28 April 2003 (2003-04-28), XP055580675, Retrieved from the Internet <URL:https://aesensors.nl/assets/uploads/2015/07/AEsensors_Miniatuur_en_Ringloadcellen_01_108524Pancake-loadcell.pdf> [retrieved on 20190412]
- FARHAD AGHILI: "DESIGN OF A LOAD CELL WITH LARGE OVERLOAD CAPACITY", TRANSACTIONS OF THE CANADIAN SOCIETY FOR MECHANICAL ENGINEERING, vol. 34, no. 3-4, 1 September 2010 (2010-09-01), CA, pages 449 - 461, XP055582643, ISSN: 0315-8977, DOI: 10.1139/tcsme-2010-0027

## Description

### FIELD OF THE INVENTION

The present invention relates to equipment for the measurement and control of feeding load material and scrap into a furnace and the relative method, in particular for the measuring and control of continuous feeding.

### BACKGROUND OF THE INVENTION

The use of continuous systems for loading scrap metal into a furnace, in particular in an electric arc furnace (EAF) for steel production, systems such as Consteel^{®} for example, and/or the addition of previously reduced material to the bath, involves the need for maintaining direct control of the load material flow as it enters the furnace.

In fact, if the continuous addition of load material in solid state is not continuously and correctly controlled, this can cause problems that reduce the overall efficiency of the productive cycle. Among these problems, the most important is the formation of thickened solid material in the scrap unloading zone in the furnace, as it maintains this consistence for a long period of time, thus prolonging the smelting time in the furnace, and as a result, prolonging the whole productive cycle.

This control is equally as important in order to guarantee that the electrical power supply to the electrodes is as homogeneous as possible, also avoiding direct contact between solid material and the electrodes, a contact that could cause the rupture of the electrodes.

In normal practice, said control is performed by an operator, the line controller, who manually regulates the scrap loading system speed according to his personal experience and his impression of the amount of load material or scrap loaded in the furnace. Naturally this operator must be extremely familiar with the process and the installation, and in any case his decisions can still always be affected by uncertain and not very reliable data reading.

One solution for resolving these problems was to provide for the inclusion of continuous furnace shell weight control means.

To achieve this aim, two types of measurement were developed: an indirect furnace shell weight control method based on the level of the liquid metal, and a more direct control method based on sensors that measure the system weight.

The indirect control method is based on geometric methods which, beginning with a reading of the liquid level, convert this data to volume data (and therefore weight), a conversion that clearly depends on the presumed profile of the refractory tank inside the furnace shell.

However, the furnace shell profile is strictly linked with erosive phenomena that the liquid metal provokes in the refractory, phenomena, which are often violent and unpredictable. Inevitably with time, this causes a lack of precision in the taring curve used to compare the level reading and the volume calculation. Considering said lack of precision and the high specific weight of iron, the measured data will reveal quite a large error, and therefore this technique cannot be used for precision control.

In the case of the direct control method, a method that is based on a direct weighing of the furnace shell structure, the weight reading systems must be located in specific zones such as support uprights and beams, which however, support not only the weight of the furnace shell, but also all the support structures, systems and sub systems of the furnace. Therefore the amount of the load material or scrap metal included constitutes only a limited percentage fraction of the measured weight, and this involves all the various aspects of lack of precision. This lack of precision becomes so great that any measurements performed can be considered reliable only as far as quality is concerned.

In the case ofwheel mounted tilting furnaces (and with the weighing system on the wheels), it is the weight of the furnace shell tilting system that must be able to resist strong mechanical stress, to raise the total read weight sacrificing measurement precision.

Document US 2016/061529 A1 discloses equipment for measuring and controlling the feeding load material and scrap into a furnace, wherein the furnace shell has a support system is composed of at least two rollers, wherein the weight sensors are mounted inside such rollers.

### SUMMARY OF THE INVENTION

The general aim of the present invention is therefore to resolve the aforesaid problems in a simple, economical and particularly functional manner.

It is an object of the present invention an equipment for measuring and controlling load material or scrap metal feeding into an electric arc furnace, having an automatic device to control load material or scrap metal feeding according to the energy supplied to the bath, plus a device for measuring the amount of added load material, in correlation with the automatic control device, comprising a device to weigh the furnace shell, its contents and any other components it may support.

It is another object of the present invention a method for measuring and controlling the feeding of the load material or scrap metal into an electric arc furnace that includes the following steps :
weighing of the load material or scrap metal added to the bath, performed by a device that weighs the furnace shell, its contents and any other components it may support;
data acquisition of a measurement reading of the amount of load material or scrap metal added to the bath, supplied by the weighing device, said reading being differential over a period of time for example;
optimizing the load flow according to suitable algorithms, obtained by adjusting the feeding speed of the load material or scrap metal according to the energy supplied to the bath;
Preferably, the feeding of the load material or scrap metal into an electric arc furnace should be continuous.

In particular, a device to measure the weight of the furnace shell and of any other components it may support provides for a support structure for the furnace shell composed of support rollers.

The function of such rollers is to recover any deviation in shape induced by the heat cycle.

Furthermore the weighing device operates with dual redundancy, at least on two of the support rollers that comprise the measuring rollers. Therefore, preferably at least two support rollers mounted on the equipment according to the present invention act as measuring rollers .

The measuring rollers are equipped with sensors for direct or indirect weight reading.

A third support roller can also act as a measuring roller equipped with sensors for direct or indirect weight reading.

Another device according to the invention to measure the weight of the shell is configured to be positioned between the electric arc furnace (EAF) and the tilting platform and includes an upper plate having an upper surface adapted to slide against a lower surface of the EAF, a lower plate having a lower surface configured to be engaged to the tilting platform, a ring structure coupled to the lower plate and having a peripheral ring wall with a longitudinal axis perpendicular to the upper and lower plates, a ring plate coupled to an inner side of the ring wall and extending across the ring structure, and a contact member coupled to the ring plate and extending along the longitudinal axis of the ring structure to upperly contact a lower surface of the upper plate and to lowerly approach, without contacting, an upper surface of the lower plate, and further include one or more sensors coupled to the ring plate that measure a deformation of the ring plate upon application of a load on the upper surface of the upper plate.

The sensors may be strain gauges that measure a strain applied to the ring plate.

An automatic device for controlling the feeding of the load material or scrap metal according to the invention further includes connection and control systems for the means used to feed or load the load material or scrap. Basically, the automatic device or system for management and control, acquires a reading of the precise measurement supplied by the weighing device, differential over a period of time, which measures in a continuous manner the amount of load material or scrap metal added to the bath, by weighing the furnace shell, its contents and all components it may support.

According to the algorithms for optimizing the load flow, the automatic management and control system thus operates on the scrap metal feeding speed to prevent any solid agglomerates that form from being sent into the bath at any energy level whatsoever (electrical and/or chemical).

A main advantage of the equipment and method according to the present invention, is the fact that by controlling the ratio between the supplied energy and weight of loaded material (scrap), the temperature of the liquid metal can be controlled, maintaining it close to the ideal value for the cycle, and being able to operate constantly at the maximum energy yielded to the bath, and therefore contributing towards raising the productive efficiency.

Furthermore, this helps prevent any human errors caused by lack of precision in operating condition calculations.

Yet a further advantage is the reduction in requests for technical information from the head operator on the line, who will have the support of a system able to analyze conditions in real time and thus help him to make the appropriate decisions automatically and in real time.

As far as the weighing device is concerned, the solution adopted according to the present invention is particularly advantageous, as it is based on a choice of general furnace configuration derived from a well- tested design and constructive scheme, but with the addition of a data acquisition method that is absolutely innovative.

The constructive scheme of the proposed furnace is based on the separation of the various functions: the function of containing the smelted material requires a compact structure, as light as possible, comprised of only the furnace shell and any other components it may support. The support and tilting of the furnace shell (during tapping, the complete emptying of the furnace shell for maintenance or remaking) require a support structure from underneath. This configuration has been demonstrated as the most suitable for the application of the weighing system since it is that which provides the best ratio between treated material, in other words, the load material or scrap metal to be fed into the furnace, and the total weight applied on the weighing system.

In fact, in the solution according to the present invention, the furnace shell weighs on the support structure by means of the rollers or other different weighing devices, whose additional function is to recover any deviation in shape induced by the heat cycle. Such rollers or other different weighing devices support the structure involved in smelting as little as possible, and therefore they are the best solution for providing efficient instrumentation aimed at monitoring the weight of the scrap metal to be added.

Given the geometry of the coupling between the furnace shell and the support structure however, other embodiments are possible, such as precision measuring systems to calculate the distance between the furnace shell body and the support structure or any furnace shell weighing system suitable for controlling scrap metal or load material feeding.

The equipment and method according to the present invention are also applicable to all operating methods that involve the addition of liquid or solid metal, in a more or less continuous manner during the operating cycle.

Although the particular equipment and method for the measuring and control of load material and scrap metal feeding into furnaces for steel production, is closely linked with the specific constructive scheme of the furnace shell, it can also be applied to other methods. It is another object of the present invention to provide a method for steel refining comprising:
continuous preheating of the load material;
feeding of said material containing iron, directly reduced iron, or a blend of both into an electric arc furnace in order to perform smelting and refining operations; - feeding of elements to form slag in the bath for steel production;
introduction of carburizing elements into the furnace for steel production;
electrical heating of the load using electrodes to melt the load and form a bath of melted metal in the furnace with a layer of melted slag on said melted metal bath;
maintaining said slag in a foamy condition during the steel production process; - feeding of metal elements, as slag formers, and carburizing elements into said furnace;
maintaining full electrical power capacity in said furnace for the total loading, smelting and refining time;
intermittent tapping from the furnace maintaining a liquid metal heel inside the furnace shell, said liquid metal heel approximately representing a weight that varies between 10% and 50% of the weight prior to tapping;
such method being characterized in that the load material or scrap metal feeding step, that is materials containing iron, directly reduced iron, or a blend of both, in an electric arc furnace, comprises the following sub-steps:
weighing of the load material or scrap metal added to the bath, supplied by a weighing device through the weighing of the furnace shell, its contents and any components it may support.
   data acquisition of a measurement reading of the amount of load material or scrap metal added to the bath, and supplied by the weighing device, differential in time for example.
   optimizing the load flow according to suitable algorithms through regulating the load material or scrap metal feeding speed, according to the energy supplied to the bath.

It is another object of the present invention to provide equipment for refining steel comprising:
an electric arc furnace for steel production, for smelting and refining a load of metal inside the furnace;
electrodes that extend inside the furnace as far as the intermediate slag level and the level of the smelted material contained in the bath;
a feeding means connected to said furnace for the introduction of load materials inside said furnace without the removal of the electrodes;
post-combustion means associated to cooperate with said feeding means in order to preheat the load materials inside said feeding means;
means for measuring and controlling load material or scrap metal feeding composed of an automatic control means for the load material or scrap metal, and a means for measuring the added load material, in correlation with the automatic control device;
a hermetically sealed mechanical device located in the inlet section of the load material or scrap metal to the feeding means;
gas injection means that communicate with said furnace above and/or below the normal melted metal level in the bath; and
means for tilting said furnace for slagging and tapping operations, the tapping means being positioned in a manner so that said slant of said furnace will maintain a heel of melted liquid material inside said bath, said heel having a weight that varies approximately between 10% and 50% of the weight prior to tapping.

### BRIEF DESCRIPTION OF THE DRAWINGS

The structural and functional characteristics of the present invention and its advantages in relation to prior technical art will be made clearer and more obvious from the following description, with reference to the appended drawings wherein:
Figures 1 and 2 are side elevation views of technical solutions according to the state of the art;
Figures 3 and 4 are side elevation views of a system according to the present invention;
Figure 5 is a block diagram of the method according to the present invention;
Figures 6A-6C are cross-sectional, front and top views of a system according to the invention;
Figures 7A-7B illustrate side views of the system of figures 6A-6C in rest and deformed states;
Figures 8A-8C are cross-sectional, front and top views of a system according to the invention;
Figure 9 illustrates a side view of the system of figures 8A-8C in a deformed state; and
Figures 10 illustrates the system of figures 6A-6C and 8A-8C in rest and loaded conditions.

### DETAILED DESCRIPTION OF EMBODIMENTS OF THE INVENTION

The term "load material" or "scrap metal" used in the present description and in the claims refers to the load material for continuous smelting, comprised of iron scrap, cast iron, directly reduced iron in the form of peens or fragments and/or a blend of both. In particular, the term "load material" includes scrap metal unless stated otherwise. In the present description and claims, the term "load material" is meant to include scrap metal unless stated otherwise.

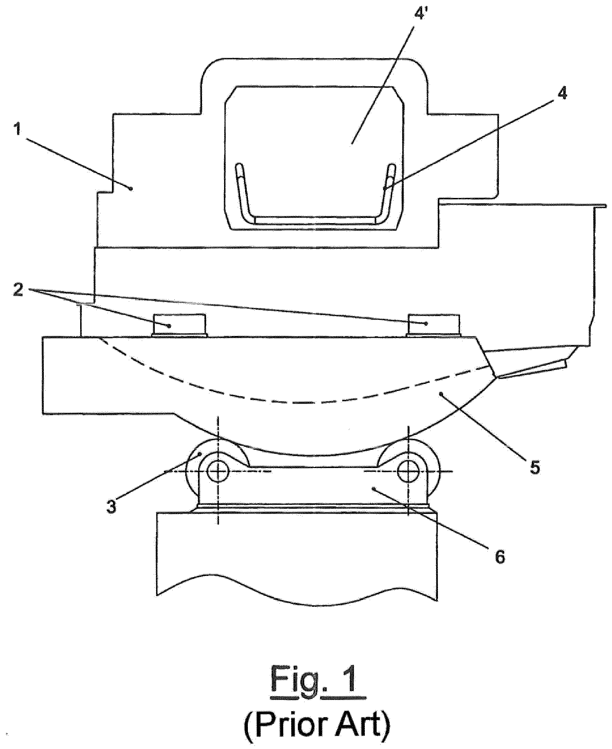

Figure 1 illustrates an electric arc furnace (EAF) supported by a tilting platform 5 (for slagging, tapping or emptying operations) having wheels 3 positioned on support bases 6.

The shell 1 of the EAF is set on the tilting platform 5 using suitable supports 2.

The side opening 4' of the EAF is used to feed the scrap metal, by means of a conveyor 4 if necessary, with a continuous feeding procedure such as that, for example in the Consteel^{®} system. The traditional configuration is sometimes equipped with instruments for reading the weight by means of sensors located in the shafts of the EAF furnace support wheels 3.

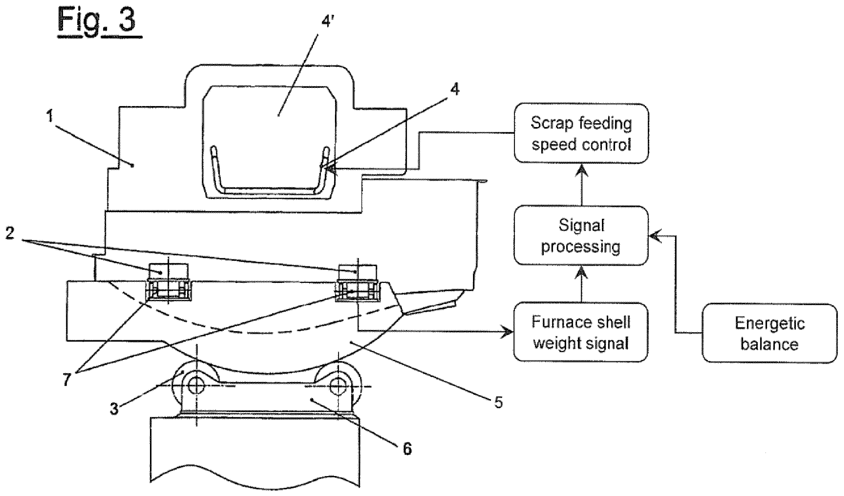

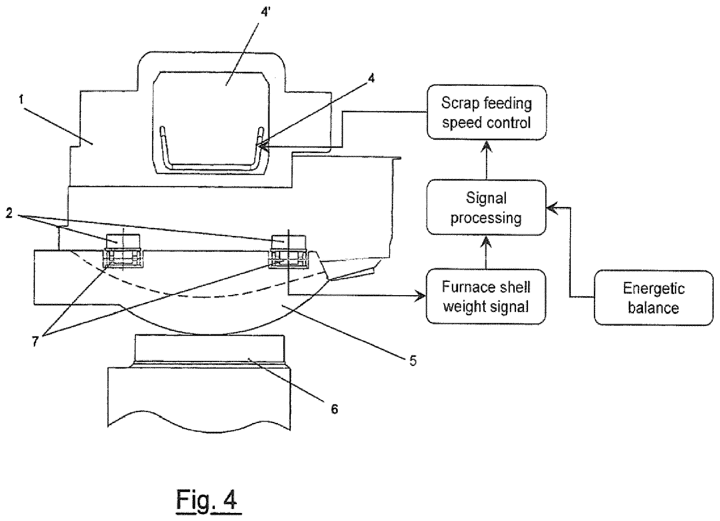

Figures 3 and 4, instead, illustrate an embodiment of the present invention. Tilting platform 5 is mounted on support base 6, and furnace shell 1 is set on suitable supports 2 on platform 5. In order to allow for structural settling due to exposure to potentially high temperatures, the furnace shell support system includes at least two rollers 7. The weight readers or sensors are mounted inside rollers 7.

Purely as an example and without limitation, these sensors can be mounted with dual redundancy in the shafts of roller 7 and be shearing stress sensors. The weighed portion is composed of furnace shell 1 only, as shown in figure 3, which weighs much less than that shown in figure 1 (furnace shell 1 plus tilting platform 5). Therefore, the sensors in rollers 7, under less strain, can be designed to have far greater precision capability.

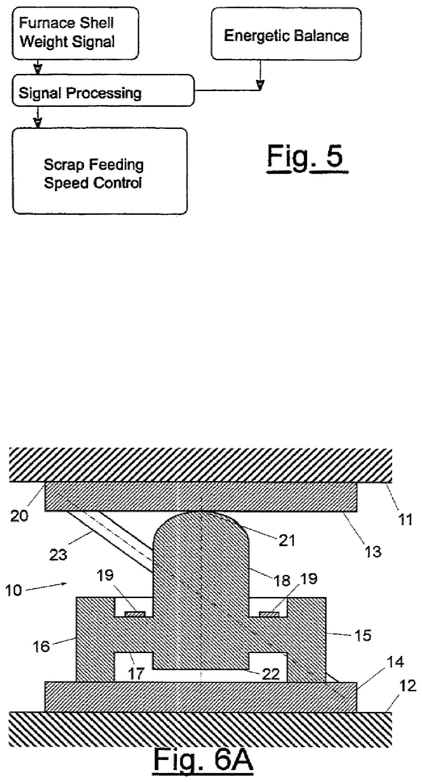

The data acquisition reading (see figure 5) together with a suitable calculation algorithm, enables step monitoring of the scrap metal feeding into furnace shell 1 in real time through opening 4' by means of the conveyor 4 . The data acquisition system (figure 5) then processes that information, also according to the energy at the furnace inlet, making it available to line operator, as well as to continuous scrap metal feeding control system 4 as described in figure 5 (for example, like in the Consteel^{®} system).

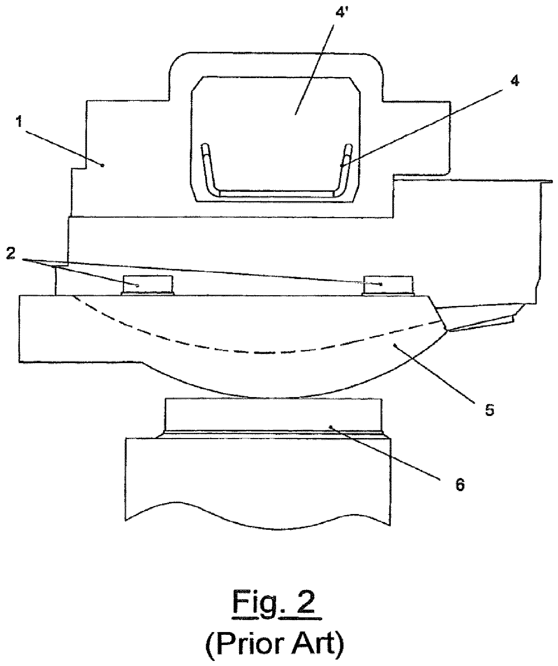

Alternatively, in the case of tilting furnaces without wheels (as in the type shown in figure 2 in the version according to present state of the art), which have weights that are not measured nearly as easily, the application of a solution according to the present invention enables real time measurement (figure 4) of the load material and has a considerable influence on the simplification of the construction of EAF systems with possible continuous feeding equipment (as in the Consteel^{®} system, for example).

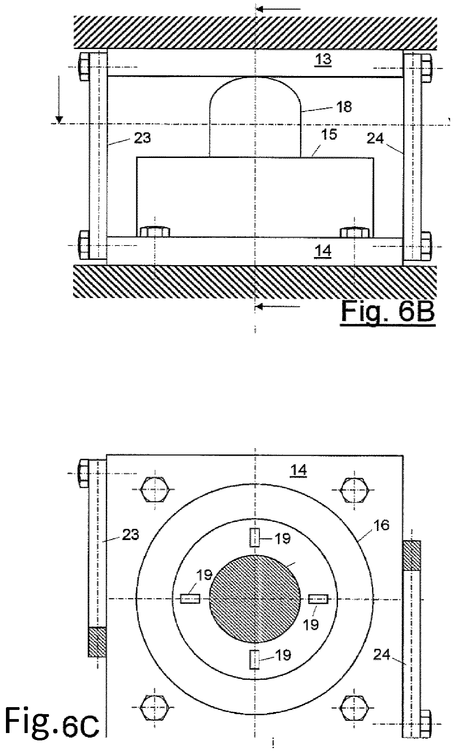

Figures 6-10 illustrate another embodiment of a measuring device according to the present invention.

As in the preceding embodiment, measuring device 10 operates as a load cell and is positioned between a shell 11 of an EAF and a tilting platform 12. In its essential elements, measuring device 10 includes an upper plate 13, which faces shell 11; a lower plate 14, which faces tilting platform 12; a ring structure 15, disposed therebetween and having a peripheral ring wall 16, a ring plate 17 subtended within ring wall 16, and a contact member 18 extending through ring plate 17; and one or more sensors 19 that measure a deformation of ring plate 17 when a load is applied upon contact member 18 by upper plate 13.

Upper plate 13 faces shell 11 and has an upper surface 20 that is adapted to slide against shell 11. In one embodiment, upper surface 20 is made from a wear-resistant material, such as Hardox^{®} abrasion-resistant steel. Alternatively, the wear-resistant material can be applied on the bottom of the furnace shell, in the area facing and contacting the upper surface 20. As a further option, the wear-resistant material can be applied on both sides of the interface between the bottom of the furnace shell and the upper surface 20.

Lower plate 14, instead, is adapted to be fixedly engaged to tilting platform 12. In rest position, lower plate 12 is essentially parallel to upper plate 11 and, in one embodiment, may be engaged to lower plate 12 using bolts.

Ring structure 15 is disposed on lower plate 14 and may or may not be fixedly attached to lower plate 14. Ring structure 15 may have a variety of perimetral shapes, for example, may have a circular perimeter, providing ring structure 15 with a cylindrical shape.

Ring wall 16 has a longitudinal axis that is perpendicular to upper and lower plates 13, 14 and, on its inner side, supports ring plate 17 that is subtended across ring structure 15 in the guise of a diaphragm, preferably in a direction parallel to upper and lower plates 12 and 14. Ring plate 17 has a thickness that is lower than a height of ring wall 16 and is not necessarily subtended in a median position between the upper and lower ends of ring wall 16. In the illustrated embodiment, for example, ring plate 17 is subtended closer to the upper end of ring wall 16, at about 2/3 of the height of ring wall 16.

Contact member 18 extends along the longitudinal axis of ring structure 15 and has an upper end 21 that contacts the lower surface of upper plate 13, and a lower end 22 that, in rest position, is positioned at a distance from underlying lower plate 14. Such distance enables contact member 18 to move downward when ring plate 17 become deformed, as will be explained later. In the illustrated embodiment, contact member 18 is integral with ring plate 17, such that ring plate 17 defines a circular crown that connects ring wall 16 to contact member 18.

Upper end 21 of contact member 18 is preferably convex, so as to minimize contact surface between contact member 18 and upper plate 13 and enable a tilting motion of upper plate 13 in relation to contact member 18, as will also be explained later. Lower end 22 of contact member 18 instead has a flat shape, and acts as a travel limit in case of overload, limiting the deformation of the load cell and therefore preventing its rupture.

In the illustrated embodiment, there are four sensors 19 that are equally spaced on ring plate 17 around contact member 18. A person of skill in the art will appreciate that different numbers of sensor 19 may be used and that sensors 19 may be spaced at different distances as desired.

Sensors 19 measure the deformation of ring plate 17 when a load applied to upper end 21 of contact member 18 causes a downward pressure on contact member 18. In one embodiment, sensors 19 are strain gauges that measure the strain applied to ring plate 17.

Sensors 19 are connected to a data acquisition system that acquires readings of one or more measurements supplied by sensors 19.

A plurality of bars 23 connect upper plate 13 to lower plate 14 and are disposed on opposite sides of upper and lower plates 13 and 14. Figures 6A, 6B, and 6C depict an embodiment of the invention, in which two bars 23 and 24 are respectively provided on opposite sides of upper and lower plates 13, 14 and extend diagonally in opposite directions, so that bar 23 connects, on one side of measuring device 10, the upper "right" end of upper plate 13 with the lower "left" end of lower plate 14, and bar 24 connects, on the opposite side of measuring device 10, the upper "left" end of upper plate 13 with the lower "right" end of lower plate 14.

The purpose of bars 23 and 24 is not only to provide a connection between upper plate 13 and lower plate 14, but also to essentially eliminate the horizontal shear stress on measuring device 10 that runs parallel to upper and lower plates 13, 14. Further, bars 23 and 24 can accommodate small misalignments between shell 11 and tilting platform 12.

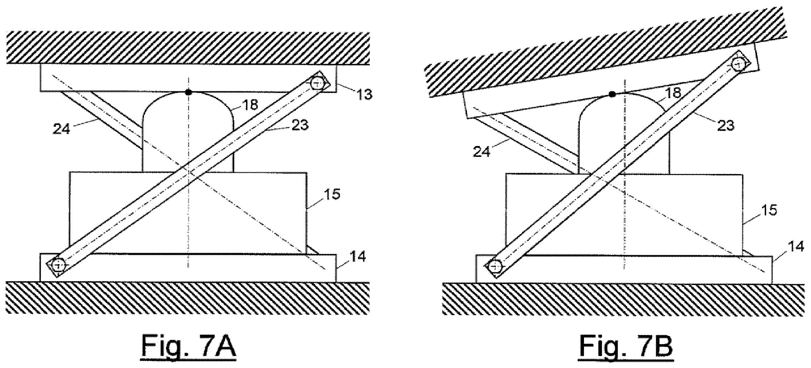

Figures 7A and 7B further illustrate how bars 23 and 24 enable small relative rotations between upper plate 13 and lower plate 14.

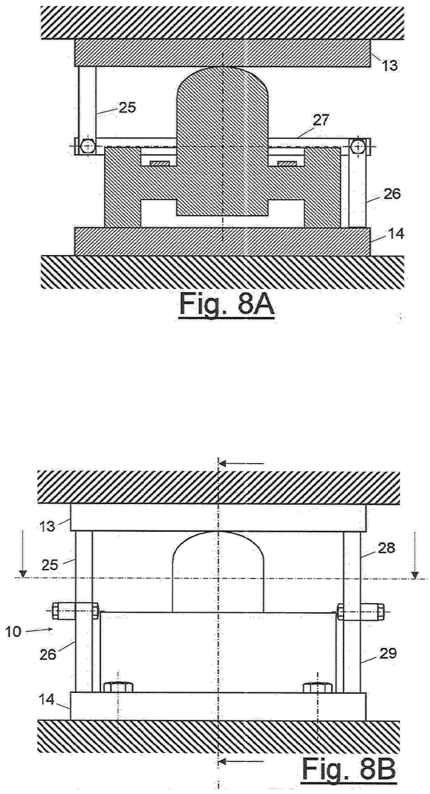

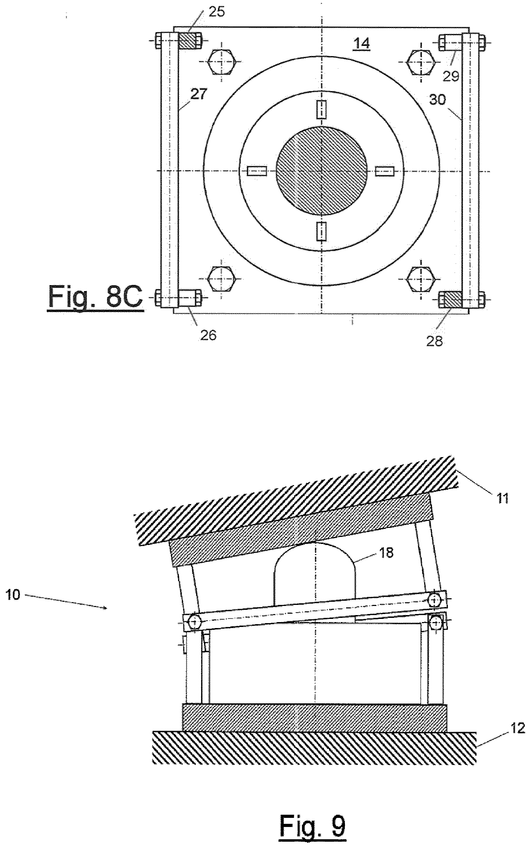

Figures 8A-8C illustrate an embodiment of the invention, in which there are three bars connecting upper plate 13 to lower plate 14 that are disposed in a step pattern on opposite sides of measuring device 10. Considering first the "left" side of measuring device 10, a first bar 25 extends downwardly for one end of upper plate 13 for about half of the distance between upper plate 13 and lower plate 14; a second bar 26 extends upwardly from an opposite end of lower plate 14 also for about half of the distance between upper plate 13 and lower plate 14; and a third bar 27 connects the lower end of first bar 25 to the upper end of second bar 26 in a direction parallel to upper and lower plates 13, 14. Three bars 28, 29, 30 also connect the opposing sides of upper and lower plates 13, 14 but in a mirror image pattern, so that, if lower plate 14 is square, then second bars 26 and 29 extend upwardly from lower plate 14 at diagonally opposite corners of lower plate 14.

Figure 9 illustrates the deformation of measuring device 10 in the last described embodiment when shell 11 becomes misaligned in relation to tilting platform 12.

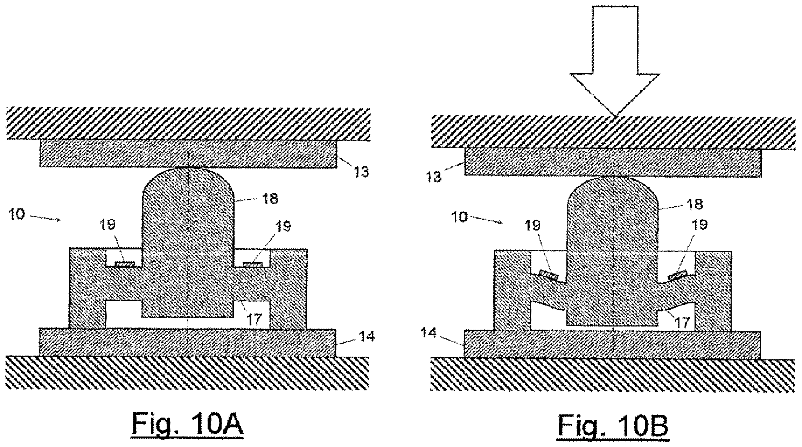

Figures 10A-10B illustrate a mode of operation of measuring device 10. As it can be seen, a downward pressure applied onto contact member 18 causes contact member 18 to translate downwardly toward lower plate 14, and also causes the circular crown defined by ring plate 17 between ring wall 16 and contact member 18 to deform in essentially conical fashion to accommodate such downward translation.

Like in the first embodiment, a system that includes measuring device 10 may further include a conveyor connected to the EAF that introduces a load material inside the EAF, and a post-combustion station cooperating with the conveyor that preheats the load materials inside the conveyor. An automatic control device may cause the load material to be fed into the EAF continuously.

Moreover, tilting platform 10 may be adapted to tilt the EAF for slagging and tapping operations, and be positioned such that a slant of the EAF maintains a heel of melted liquid material inside the EAF that has a weight between 10% and 50% of the weight before tapping.

It should be noted that data acquisition of measurement readings, using the above described equipment, of the amounts of load material or scrap metal added to the bath, possibly differentially in time enables a calculation of load flow optimization using suitable algorithms. Based on these data, equipment and systems according to the invention enable regulation of the load material or scrap metal feeding speed.

A measuring device configured as illustrated in figures 6-10 offers several advantages, even over the measuring device illustrated in figures 3 and 4. Some of these advantages can be summarized as follows:
Greater precision: While the measuring device depicted in figures 3-4 provides precision levels in the order of 2%, the measuring device depicted in figures 6-10 provides precision levels of 0.3-0.5% by providing more accurate readings of the bending deformation of the the circular crown defined by ring plate 17;
Easier maintenance: The measuring device depicted in figures 3-4 may have a weight of a few hundred kilograms, including rollers and shafts, which makes it difficult for an operator to handle. The measuring device depicted in figures 6-10 has a smaller volume, with a weight in the region of 10-20 kg, which can be handled by a single operator. This provides for an easier replacement, not only when the EAF is completely lifted for maintenance, but even without lifting the EAF by acting locally with a hydraulic lift or a jack to spread the facing surfaces of the upper and lower plate for a limited distance, in order to free and replace the measuring device;
Lower cost: The measuring device depicted in figures 3-4 is not only heavier, but requires a larger number of machined components than the measuring device depicted in figures 6-10, which has fewer mechanical parts and a lower weight, thereby reducing production costs.

## Claims

1. Equipment to measure and control a load material fed into an electrical arc furnace (EAF) that rests on a tilting platform (5, 12), the equipment comprising:
an automatic control device feeding the load material according to energy supplied to a bath; and
a measuring device (10) for the load material, operatively coupled to the automatic control device, the measuring device (10) weighing a shell (1,11) of the EAF, contents thereof, and any other components supported by the shell (1,11),
wherein the measuring device (10) is adapted to be positioned between the EAF and the tilting platform (5,12) and comprises:
an upper plate (13) having an upper surface (20) adapted to slide against a lower surface of the EAF;
a lower plate (14) having a lower surface adapted to be engaged to the tilting platform (5, 12);
a ring structure (15) coupled to an upper surface of the lower plate (14) and having,
a peripheral ring wall (16) with a longitudinal axis perpendicular to the upper and lower plates (13, 14),
a ring plate (17) coupled to an inner side of the ring wall (16) and subtended across the ring structure (15) in the guise of a diaphragm, and
a contact member (18) coupled to the ring plate (17) and extending along the longitudinal axis of the ring structure (15) to upperly contact a lower surface of the upper plate (13) and adapted to lowerly approach, without contacting, an upper surface of the lower plate (14) when the ring plate (17) become deformed, and
one or more sensors (19) coupled to the ring plate (17) and measuring a deformation of the ring plate (17) upon application of a load on the upper surface (20) of the upper plate (13),
wherein the equipment further comprises a plurality of bars (23,24,25,26,27,28,29,30) connecting the upper plate (13) to the lower plate (14) on facing opposing sides of the upper and lower plates (13,14).

2. The equipment according to claim 1, wherein the upper surface (20) of the upper plate (13) is made from abrasion-resistant steel.

3. The equipment according to claim 1, wherein the lower surface of the EAF in contact with the upper surface (20) of the upper plate (13) is made from abrasion-resistant steel.

4. The equipment according to claim 1, wherein the ring wall (16) has a circular perimeter.

5. The equipment according to claim 1, wherein ring plate (17) is parallel to the upper and lower plates (13,14) and closer to an upper end of the ring wall (16) than to a lower end of the ring wall (16).

6. The equipment according to claim 1, wherein the contact member (18) has a convex upper end (21), thereby minimizing a contact area between the contact member (18) and the upper plate (13).

7. The equipment according to claim 1, wherein the contact member (18) has a flat lower end (22), acting as a travel limit in case of overload thereby preventing the rupture of the measuring device (10).

8. The equipment according to claim 1, wherein there is a plurality of sensors (19) disposed on opposite sides of the contact member (18).

9. The equipment according to claim 1, wherein the one or more sensors (19) are one or more strain gauges measuring a strain of the ring plate (17) upon application of the load on the upper surface (20) of the upper plate (13).

10. The equipment according to claim 1, wherein the plurality of bars (23,24,25,26,27,28,29,30) comprises two bars (23,24) disposed diagonally in opposite directions.

11. The equipment according to claim 10, wherein the plurality of bars (23,24,25,26,27,28,29,30) comprises, on each of the facing opposing sides of the upper and lower plates (13, 14), three bars (25,26,27) joined in a step pattern, the three bars (25,26,27) comprising a first bar (25) extending downwardly from a first lateral end of the upper plate (13), a second bar (26) extending upwardly from an opposite lateral end of the lower plate (14), and a third bar (27) parallel to the upper and lower plates (13,14) and connecting a lower end of the first bar (25) and an upper end of the second bar (26).

12. The equipment according to claim 1, further comprises a data acquisition system of a reading of one or more measurements supplied by the one or more sensors (19).

13. The equipment according to claim 1, wherein the automatic control device is configured to feed the load material into the EAF continuously.

14. A system for refining steel, comprising:
an electric arc furnace (EAF) producing steel by smelting and refining a load material inside the EAF;
a conveyor (4) connected to the EAF to introduce the load material inside the EAF;
a post-combustion station cooperating with the conveyor (4) and preheating the load materials inside the conveyor (4);
a tilting platform (5,12) for tilting the EAF for slagging and tapping operations, the tilting platform (5,12) being positioned such that a slant of the EAF maintains a heel of melted liquid material inside the EAF, the heel having a weight that is between 10% and 50% of the weight prior to tapping; and
equipment according to claim 1, configured to measure and control feeding of the load material to the EAF, the equipment being positioned between the EAF and the tilting platform (5,12).

15. The system according to claim 14, further comprising a plurality of bars (23,24,25,26,27,28,29,30) connecting the upper plate (13) to the lower plate (14) on facing opposing sides of the upper and lower plates (13,14).

16. The system according to claim 15, wherein the plurality of bars (23,24,25,26,27,28,29,30) comprises two bars (23,24) disposed diagonally in opposite directions.

17. The system according to claim 15, wherein the plurality of bars (23,24,25,26,27,28,29,30) comprises, on each of the facing opposing sides of the upper and lower plates (13, 14), three bars (25,26,27) joined in a step pattern, the three bars (25,26,27) comprising a first bar (25) extending downwardly from a first lateral end of the upper plate (13), a second bar (26) extending upwardly from an opposite lateral end of the lower plate (14), and a third bar (27) parallel to the upper and lower plates (13,14) and connecting a lower end of the first bar (25) and an upper end of the second bar (26).

## Patentansprüche

1. Vorrichtung zum Messen und Steuern eines in einen Elektrolichtbogenofen (EAF) eingeführten Beschickungsgutes, das auf einer Kippplattform (5, 12) ruht, die Vorrichtung umfassend:
eine automatische Steuervorrichtung, welche die Zufuhr des Beschickungsgutes in Abhängigkeit von der einem Bad zugeführten Energie steuert; und
eine Messvorrichtung (10) für das Beschickungsgut, die mit der automatischen Steuervorrichtung operativ gekoppelt ist, wobei die Messvorrichtung (10) einen Mantel (1, 11) des Elektrolichtbogenofens, dessen Inhalt und alle anderen von dem Mantel (1, 11) getragenen Komponenten wiegt,
wobei die Messvorrichtung (10) angepasst ist, um zwischen dem Elektrolichtbogenofen und der Kippplattform (5, 12) positioniert zu werden, und Folgendes umfasst:
eine obere Platte (13) mit einer oberen Fläche (20), die angepasst ist, um gegen eine untere Fläche des Elektrolichtbogenofens zu gleiten;
eine untere Platte (14) mit einer unteren Fläche, die angepasst ist, um mit der Kippplattform (5, 12) in Eingriff gebracht zu werden;
eine Ringstruktur (15), die mit einer oberen Fläche der unteren Platte (14) gekoppelt ist und Folgendes aufweist:
eine umlaufende Ringwand (16) mit einer Längsachse, die senkrecht zu der oberen und unteren Platte (13, 14) verläuft,
eine Ringplatte (17), die mit einer Innenseite der Ringwand (16) gekoppelt ist und sich in Form einer Membran über die Ringstruktur (15) erstreckt, und
ein Kontaktelement (18), das mit der Ringplatte (17) gekoppelt ist und sich entlang der Längsachse der Ringstruktur (15) erstreckt, um eine untere Fläche der oberen Platte (13) oben zu berühren, und das angepasst ist, um sich einer oberen Fläche der unteren Platte (14) unten zu nähern, ohne sie zu berühren, wenn die Ringplatte (17) verformt wird, und
einen oder mehrere Sensoren (19), die mit der Ringplatte (17) gekoppelt sind und eine Verformung der Ringplatte (17) bei Aufbringen einer Last auf die obere Fläche (20) der oberen Platte (13) messen,
wobei die Vorrichtung ferner eine Vielzahl von Stäben (23, 24, 25, 26, 27, 28, 29, 30) umfasst, welche die obere Platte (13) mit der unteren Platte (14) an einander gegenüberliegenden Seiten der oberen und unteren Platte (13, 14) verbinden.

2. Vorrichtung nach Anspruch 1, wobei die obere Fläche (20) der oberen Platte (13) aus abriebfestem Stahl besteht.

3. Vorrichtung nach Anspruch 1, wobei die untere Fläche des Elektrolichtbogenofens, die mit der oberen Fläche (20) der oberen Platte (13) in Kontakt ist, aus abriebfestem Stahl besteht.

4. Vorrichtung nach Anspruch 1, wobei die Ringwand (16) einen kreisförmigen Umfang aufweist.

5. Vorrichtung nach Anspruch 1, wobei die Ringplatte (17) parallel zu der oberen und unteren Platte (13, 14) und näher an einem oberen Ende der Ringwand (16) als an einem unteren Ende der Ringwand (16) liegt.

6. Vorrichtung nach Anspruch 1, wobei das Kontaktelement (18) ein konvexes oberes Ende (21) aufweist, wodurch eine Kontaktfläche zwischen dem Kontaktelement (18) und der oberen Platte (13) minimiert wird.

7. Vorrichtung nach Anspruch 1, wobei das Kontaktelement (18) ein flaches unteres Ende (22) aufweist, das im Falle einer Überlast als Wegbegrenzung wirkt und dadurch den Bruch der Messvorrichtung (10) verhindert.

8. Vorrichtung nach Anspruch 1, wobei eine Vielzahl von Sensoren (19) auf gegenüberliegenden Seiten des Kontaktelementes (18) angeordnet sind.

9. Vorrichtung nach Anspruch 1, wobei der eine oder die mehreren Sensoren (19) ein oder mehrere Dehnungsmessstreifen sind, die eine Dehnung der Ringplatte (17) bei Aufbringen der Last auf die obere Fläche (20) der oberen Platte (13) messen.

10. Vorrichtung nach Anspruch 1, wobei die Vielzahl von Stäben (23, 24, 25, 26, 27, 28, 29, 30) zwei diagonal in entgegengesetzten Richtungen angeordnete Stäbe (23, 24) umfasst.

11. Vorrichtung nach Anspruch 10, wobei die Vielzahl von Stäben (23, 24, 25, 26, 27, 28, 29, 30) auf jeder der einander gegenüberliegenden Seiten der oberen und unteren Platte (13, 14) drei Stäbe (25, 26, 27) umfasst, die in einem Stufenmuster verbunden sind, wobei die drei Stäbe (25, 26, 27) einen ersten Stab (25) umfassen, der sich von einem ersten seitlichen Ende der oberen Platte (13) nach unten erstreckt, sowie einen zweiten Stab (26), der sich von einem gegenüberliegenden seitlichen Ende der unteren Platte (14) nach oben erstreckt, und einen dritten Stab (27), der parallel zu der oberen und unteren Platte (13, 14) verläuft und ein unteres Ende des ersten Stabes (25) und ein oberes Ende des zweiten Stabes (26) verbindet.

12. Vorrichtung nach Anspruch 1, ferner umfassend ein Datenerfassungssystem zum Ablesen eines oder mehrerer Messwerte, die von dem einen oder den mehreren Sensoren (19) geliefert werden.

13. Vorrichtung nach Anspruch 1, wobei die automatische Steuervorrichtung konfiguriert ist, um das Beschickungsgut kontinuierlich in den Elektrolichtbogenofen einzuführen.

14. System zur Veredelung von Stahl, umfassend:
einen Elektrolichtbogenofen (EAF), in dem Stahl durch Schmelzen und Veredeln eines Beschickungsgutes im Elektrolichtbogenofen erzeugt wird;
einen Förderer (4), der mit dem Elektrolichtbogenofen verbunden ist, um das Beschickungsgut in den Elektrolichtbogenofen einzuführen;
eine Nachverbrennungsstation, die mit dem Förderer (4) zusammenwirkt und das Beschickungsgut innerhalb des Förderers (4) vorwärmt;
eine Kippplattform (5, 12) zum Kippen des Elektrolichtbogenofens für Verschlackungs- und Abstichvorgänge, wobei die Kippplattform (5, 12) so positioniert ist, dass eine Neigung des Elektrolichtbogenofens einen Absatz von geschmolzenem flüssigem Material im Inneren des Elektrolichtbogenofens aufrechterhält, wobei der Absatz ein Gewicht aufweist, das zwischen 10 % und 50 % des Gewichtes vor dem Abstechen beträgt; und
die Vorrichtung nach Anspruch 1, die konfiguriert ist, um die Zufuhr des Beschickungsgutes zum Elektroofen zu messen und zu steuern, wobei die Vorrichtung zwischen dem Elektrolichtbogenofen und der Kippplattform (5, 12) angeordnet ist.

15. System nach Anspruch 14, ferner umfassend eine Vielzahl von Stäben (23, 24, 25, 26, 27, 28, 29, 30), welche die obere Platte (13) mit der unteren Platte (14) an einander gegenüberliegenden Seiten der oberen und unteren Platte (13, 14) verbinden.

16. System nach Anspruch 15, wobei die Vielzahl von Stäben (23, 24, 25, 26, 27, 28, 29, 30) zwei diagonal in entgegengesetzten Richtungen angeordnete Stäbe (23, 24) umfasst.

17. System nach Anspruch 15, wobei die Vielzahl von Stäben (23, 24, 25, 26, 27, 28, 29, 30) auf jeder der einander gegenüberliegenden Seiten der oberen und unteren Platte (13, 14) drei Stäbe (25, 26, 27) umfasst, die in einem Stufenmuster verbunden sind, wobei die drei Stäbe (25, 26, 27) einen ersten Stab (25) umfassen, der sich von einem ersten seitlichen Ende der oberen Platte (13) nach unten erstreckt, sowie einen zweiten Stab (26), der sich von einem gegenüberliegenden seitlichen Ende der unteren Platte (14) nach oben erstreckt, und einen dritten Stab (27), der parallel zu der oberen und unteren Platte (13, 14) verläuft und ein unteres Ende des ersten Stabes (25) und ein oberes Ende des zweiten Stabes (26) verbindet.

## Revendications

1. Équipement pour mesurer et commander un matériau de charge alimenté dans un four à arc électrique (EAF) qui repose sur une plateforme basculante (5, 12), l'équipement comprenant :
un dispositif de commande automatique alimentant le matériau de charge selon l'énergie fournie au bain ; et
un dispositif de mesure (10) pour le matériau de charge, couplé fonctionnellement au dispositif de commande automatique, le dispositif de mesure (10) pesant une coque (1,11) de l'EAF, son contenu et un quelconque autre composant supporté par la coque (1,11),
dans lequel le dispositif de mesure (10) est conçu pour être positionné entre l'EAF et la plateforme basculante (5,12) et comprend :
une plaque supérieure (13) ayant une surface supérieure (20) conçue pour glisser contre une surface inférieure de l'EAF ;
une plaque inférieure (14) ayant une surface inférieure conçue pour venir en prise avec la plateforme basculante (5, 12) ;
une structure annulaire (15) couplée à une surface supérieure de la plaque inférieure (14) et ayant,
une paroi annulaire périphérique (16) avec un axe longitudinal perpendiculaire aux plaques supérieure et inférieure (13, 14),
une plaque annulaire (17) couplée à un côté interne de la paroi annulaire (16) et sous-tendue à travers la structure annulaire (15) sous la forme d'un diaphragme, et
un élément de contact (18) couplé à la plaque annulaire (17) et se prolongeant le long de l'axe longitudinal de la structure annulaire (15) pour entrer en contact supérieur avec une surface inférieure de la plaque supérieure (13) et conçu pour s'approcher inférieurement, sans contact, d'une surface supérieure de la plaque inférieure (14) lorsque la plaque annulaire (17) se déforme, et
un ou plusieurs capteurs (19) couplés à la plaque annulaire (17) et mesurant une déformation de la plaque annulaire (17) lors de l'application d'une charge sur la surface supérieure (20) de la plaque supérieure (13),
dans lequel l'équipement comprend également une pluralité de barres (23, 24, 25, 26, 27, 28, 29, 30) connectant la plaque supérieure (13) à la plaque inférieure (14) sur les côtés opposés se faisant face des plaques supérieure et inférieure (13, 14).

2. Équipement selon la revendication 1, dans lequel la surface supérieure (20) de la plaque supérieure (13) est en acier résistant à l'abrasion.

3. Équipement selon la revendication 1, dans lequel la surface inférieure de l'EAF en contact avec la surface supérieure (20) de la plaque supérieure (13) est en acier résistant à l'abrasion.

4. Équipement selon la revendication 1, dans lequel la paroi annulaire (16) a un périmètre circulaire.

5. Équipement selon la revendication 1, dans lequel la plaque annulaire (17) est parallèle aux plaques supérieure et inférieure (13,14) et plus proche d'une extrémité supérieure de la paroi annulaire (16) que d'une extrémité inférieure de la paroi annulaire (16).

6. Équipement selon la revendication 1, dans lequel l'élément de contact (18) a une extrémité supérieure convexe (21), minimisant ainsi la surface de contact entre l'élément de contact (18) et la plaque supérieure (13).

7. Équipement selon la revendication 1, dans lequel l'élément de contact (18) a une extrémité inférieure plate (22), agissant comme une limite de course en cas de surcharge, empêchant ainsi la rupture du dispositif de mesure (10).

8. Équipement selon la revendication 1, dans lequel il existe une pluralité de capteurs (19) disposés sur les côtés opposés de l'élément de contact (18).

9. Équipement selon la revendication 1, dans lequel les un ou plusieurs capteurs (19) sont une ou plusieurs jauges de contrainte mesurant une contrainte de la plaque annulaire (17) lors de l'application de la charge sur la surface supérieure (20) de la plaque supérieure (13).

10. Équipement selon la revendication 1, dans lequel la pluralité de barres (23, 24, 25, 26, 27, 28, 29, 30) comprend deux barres (23, 24) disposées en diagonale dans des directions opposées.

11. Équipement selon la revendication 10, dans lequel la pluralité de barres (23, 24, 25, 26, 27, 28, 29, 30) comprend, sur chacun des côtés opposés se faisant face des plaques supérieure et inférieure (13, 14), trois barres (25, 26, 27) assemblées en escalier, les trois barres (25, 26, 27) comprenant une première barre (25) se prolongeant vers le bas à partir d'une première extrémité latérale de la plaque supérieure (13), une deuxième barre (26) se prolongeant vers le haut à partir d'une extrémité latérale opposée de la plaque inférieure (14), et une troisième barre (27) parallèle aux plaques supérieure et inférieure (13, 14) et connectant une extrémité inférieure de la première barre (25) et une extrémité supérieure de la deuxième barre (26).

12. Équipement selon la revendication 1, comprenant également un système d'acquisition de données d'une lecture d'une ou de plusieurs mesures fournies par les un ou plusieurs capteurs (19).

13. Équipement selon la revendication 1, dans lequel le dispositif de commande automatique est configuré pour alimenter en continu le matériau de charge dans l'EAF.

14. Système d'affinage de l'acier, comprenant :
un four à arc électrique (EAF) produisant de l'acier par fusion et affinage d'un matériau de charge à l'intérieur de l'EAF ;
un convoyeur (4) connecté à l'EAF pour introduire le matériau de charge à l'intérieur de l'EAF ;
une station de post-combustion coopérant avec le convoyeur (4) et préchauffant les matériaux de charge à l'intérieur du convoyeur (4) ;
une plateforme basculante (5, 12) pour basculer l'EAF en vue des opérations de déscoriage et de coulée, la plateforme basculante (5, 12) étant positionnée de sorte qu'une inclinaison de l'EAF maintient un talon de matériau liquide fondu à l'intérieur de l'EAF, le talon ayant un poids compris entre 10 % et 50 % du poids avant la coulée ; et
un équipement selon la revendication 1, configuré pour mesurer et commander l'alimentation du matériau de charge dans l'EAF, l'équipement étant positionné entre l'EAF et la plateforme basculante (5,12).

15. Système selon la revendication 14, comprenant également une pluralité de barres (23, 24, 25, 26, 27, 28, 29, 30) connectant la plaque supérieure (13) à la plaque inférieure (14) sur les côtés opposés se faisant face des plaques supérieure et inférieure (13, 14).

16. Système selon la revendication 15, dans lequel la pluralité de barres (23, 24, 25, 26, 27, 28, 29, 30) comprend deux barres (23, 24) disposées en diagonale dans des directions opposées.

17. Système selon la revendication 15, dans lequel la pluralité de barres (23, 24, 25, 26, 27, 28, 29, 30) comprend, sur chacun des côtés opposés se faisant face des plaques supérieure et inférieure (13, 14), trois barres (25, 26, 27) assemblées en escalier, les trois barres (25, 26, 27) comprenant une première barre (25) se prolongeant vers le bas à partir d'une première extrémité latérale de la plaque supérieure (13), une deuxième barre (26) se prolongeant vers le haut à partir d'une extrémité latérale opposée de la plaque inférieure (14), et une troisième barre (27) parallèle aux plaques supérieure et inférieure (13, 14) et connectant une extrémité inférieure de la première barre (25) et une extrémité supérieure de la deuxième barre (26).
